# EUROPEAN PATENT SPECIFICATION

(11) **EP 1 054 847 B1**
(45) Date of publication and mention of the grant of the patent: **24.11.2010**
(21) Application number: 99901483.0
(22) Date of filing: 14.01.1999
(51) Int. Cl.: C04B 35/83, C04B 35/80, C04B 41/89, F16D 69/02

(54) **PARTIALLY DENSIFIED CARBON PREFORM**
TEILWEISE VERDICHTETE KOHLENSTOFFVORFORM
PREFORME DE CARBONE PARTIELLEMENT DENSIFIEE

(30) Priority: 09.02.1998 US 20432
(43) Date of publication of application: 29.11.2000
(73) Proprietor: Messier-Bugatti S.A., 78141 Vélizy (FR)
(72) Inventor: CONNORS, Donald, F., Jr., Nashua, NH 03060 (US)
(74) Representative: Joly, Jean-Jacques
(86) International application number: PCT/US1999/000850
(87) International publication number: WO 1999/040043

(56) References cited:
- EP-A- 0 515 186
- EP-A- 0 592 239

## Description

### BACKGROUND OF THE INVENTION

Presently, high performance brake disks for aircraft are frequently made by densifying carbon preforms through chemical vapor deposition using a gaseous methane precursor to form a carbon/carbon composite. This traditional densification process typically involves repeated densification cycles followed by machining of the preform surface to open pores closed during densification. One disadvantage of this technique is that it can require large amounts of time, sometimes on the order of hundreds of hours to fully densify the preform.

Alternatively, the densification must be performed slowly so that the pores on the outside of the preform do not become filled before the pores on the inside of the preform. Were the pores on the outside of the preform to be blocked before densification of the interior portions, insufficient precursor would reach the inner portions of the preform and it would not be fully densified.

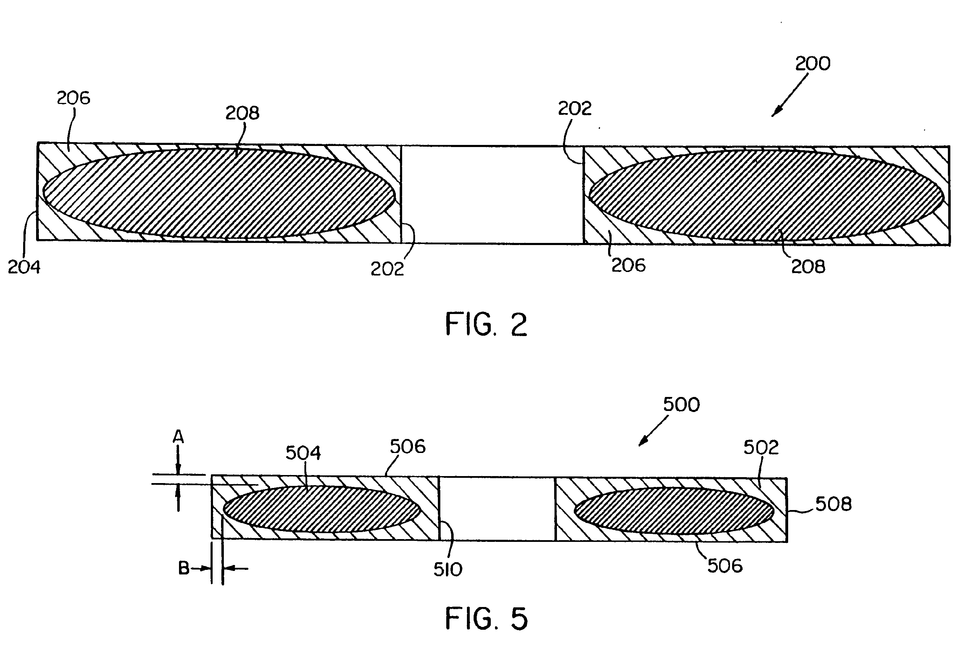

One approach to avoid this problem is by using a precursor liquid hydrocarbon densification process, such as is disclosed in U.S. Patent 5,389,152, issued on February 14, 1995 to Thurston 5,389,152, issued on February 14, 1995 to Thurston et al. In this process, overall densification occurs from the inside of the preform outward. Densification can, thus, be performed at a higher rate without concern that the pores at the exterior of the preform will be blocked and prevent densification of the preform interior. However, some other portions of a preform, densified using a precursor liquid, typically remained undensified, such as shown in Figure 2 and must be machined off.

Further, although the liquid precursor process typically has shorter densification times, chemical vapor deposition (CVD) techniques are often employed despite the longer process times, because the densified preforms made by the CVD process have been certified for military and commercial aircraft use.

WO 88/10245 discloses a method for manufacturing a carbon/carbon component such as a brake disk. A substrate is first impregnated with a liquid hydrocarbon, and is then subject to carbonization. This leaves a matrix of porous coke within the pores of the substrate. The substrate is then further densified using CVD. Holes are formed in the substrate in the thickness direction of the substrate for facilitating precursor gas flow through the substrate during CVD.

Therefore, a need exists for an improved densification method using a liquid precursor that densifies the entire preform and that allows components to meet required certification standards, while allowing the components to be made more quickly than by CVD.

### SUMMARY OF THE INVENTION

The invention includes a partially densified preform and a method for the densification of one or more porous preforms.

In the method of this invention, the porous preform is submerged in a precursor liquid which is heat-decomposable. The porous preform is heated in the precursor liquid to a temperature sufficient to decompose the precursor liquid and to deposit a first decomposition product of the precursor liquid within the preform. Heating of the preform is ceased in the precursor liquid prior to densifying the surfaces of the preform, thereby forming a partially densified preform.

In one embodiment of this method, densification of the preform is completed by chemical vapor deposition using a gaseous precursor that heat decomposes to a second decomposition product within the undensified portions of the preform, thereby further densifying the preform. Preferably the first decomposition product and the second decomposition product are of the same chemical species.

The partially densified preform includes a preform and a densified region within the preform. The densified region includes a deposited decomposition product of a precursor liquid. An undensified region of the preform is between the densified region and at least one surface of the preform.

### BRIEF DESCRIPTION OF THE DRAWINGS

Figure 1 is a schematic drawing of a reactor for densifying preforms.
Figure 2 is a cross-sectional view of a brake disk preform densified in an apparatus as shown in Figure 1 and using a precursor liquid and a process described in Example 1.
Figure 3 is a perspective view of a second brake disk preform that is partially densified with a liquid hydrocarbon with the remainder being densified by chemical vapor deposition with a gaseous hydrocarbon.
Figure 4 is a perspective view of a third brake disk preform, wherein the surfaces of the inner and outer diameters were insulated during densification using a liquid hydrocarbon, that is partially densified with a liquid hydrocarbon with the remainder being densified by chemical vapor deposition with a gaseous hydrocarbon.
Figure 5 is a cross-sectional view of a fourth brake disk preform that is partially densified as described in Example 2.

### DETAILED DESCRIPTION OF THE INVENTION

The features and details of the method and apparatus of the invention will now be more particularly described with reference to the accompanying drawings and pointed out in the claims.

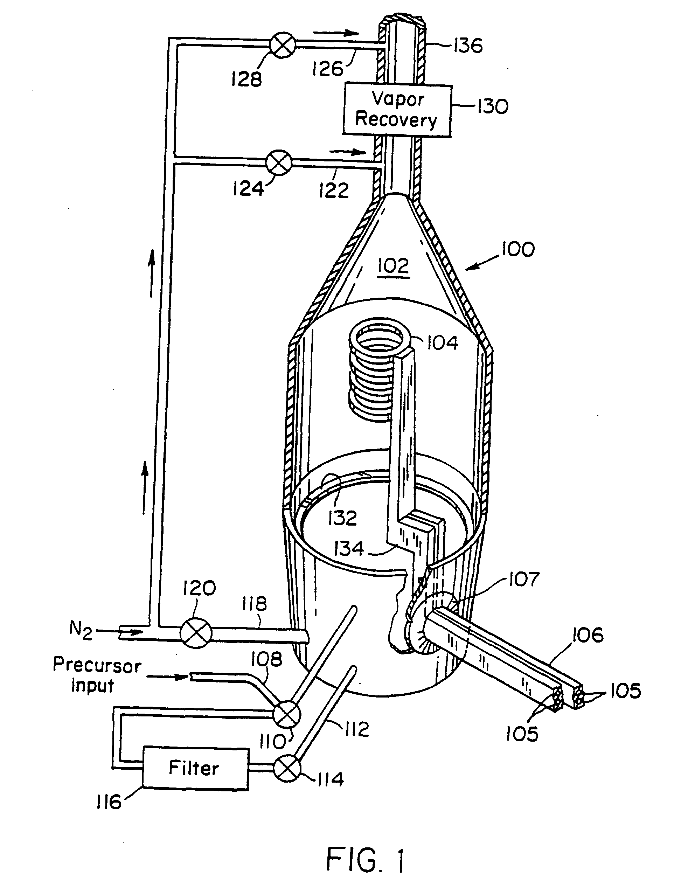

Figure 1 shows reactor 100 which is suitable for performing densification according to the method described in U.S. Patent 5,389,152, issued to Thurston et al. on February 14, 1995 and according to the method in U.S. Patent 4,472,454, issued to Houdayer et al. on September 18, 1984. Reactor 100 is described in U.S. Patent 5,397,595, issued to Carroll et al. on March 14, 1995 and in U.S. Patent 5,547,717, issued to Scaringella et al. on August 20, 1996. When an induction coil, such as induction coil 104, is used to heat a preform, reactor 100 is preferably made from non-magnetic materials, such as aluminum, quartz, glass, stainless steel, ceramic or combinations thereof.

Reactor 100 contains cavity 102 in which one or more preforms (not shown) are densified. In operation, cavity 102 is filled with a precursor liquid sufficient to at least cover the preform. The precursor liquid is a liquid which vaporizes and decomposes within the preform to deposit a decomposition product of the precursor at a temperature to which the preform can be heated. Depending upon the precursor liquid, the decomposition product can be carbon, silicon carbide, silicon nitride, or another decomposition product. The precursor liquid should also be a dielectric. Preferably, the dielectric constant of the precursor liquid should be above 0.5, more preferably above one, and most preferably above 1.5. To deposit carbon within the preform, a hydrocarbon with an appropriate boiling point, such as cyclohexane, n-hexane or benzene can be used. Methyltrichlorosilane, dimethyldichlorosilane, methyldichlorosilane or other organosilane or organosilane mixtures can be used for depositing silicon carbide. Also, the precursor liquid can be chosen to co-deposit materials. For example, a mixture of silicon carbide and silicon nitride can be deposited using tris-n-methyl amino silane or other silane compound.

One or more induction coils 104 are positioned within cavity 102. In operation, induction coil 104 is covered by the precursor liquid and operates to heat the preform. Induction coil 104 can be formed from copper or other highly conductive material which does not react with the precursor liquid even if heated.

Electrical energy is provided to induction coil 104 through busses 106. Busses 106 are made of a highly conductive material, such as copper. Currents of hundreds of amperes to thousands of amperes are preferably used to provide sufficient power to heat the preform. Because of the large amount of current, busses 106 should have sufficient cross sections to avoid excess heating. Busses 106 can contain water passages 105 to carry cooling water through busses 106 and through induction coil 104.

Busses 106 are connected to a power supply (not shown). An AC supply is used. The voltage, current, frequency and shape of induction coil 104 are determined by the shape, geometry and the electrical properties of the preform using known techniques. Typically, the initial power is at a level that inductively heats the preform to generate a temperature in the center of the preform that is high enough to decompose the precursor and form a decomposition product within the preform, but low enough such that undensified areas of the preform are not sealed off by decomposition product deposition external to these areas, thereby resulting in non-uniform densification. At the densification center, which is not necessarily, but is typically, at the center of the preform, the temperature is typically in the range of between about 850° and 2,000°C. The preferred temperature is in the range of between about 850° and 1,000°C.

Busses 106 pass through seal 107 to enter chamber 102. As chamber 102 contains a precursor liquid during operation, seal 107 must be resilient and also resistant to chemical attack by the precursor liquid. Seal 107 should also electrically insulate busses 106 from reactor 100 in the event reactor 100 is formed from conducting components. For example, silicone rubber can be used to seal the opening in reactor 100 through which busses 106 pass.

As a matter of convenience, busses 106 enter the lower portion of reactor 100. If busses 106 enter the upper position of reactor chamber 102, seal 107 is still needed. It does not have to prevent the escape of liquid, but it does have to prevent the escape of vapor from chamber 102. Busses 106 can enter chamber 102 through stack 136, in which case no special seal is needed. However, it is desirable to keep busses 106 as short as possible to reduce power loss in the busses.

Precursor liquid is supplied to reactor 100 through precursor input 108 via valve 110. Initially, chamber 102 is filled with a precursor liquid of sufficient quantity to cover the preform. In operation, the precursor liquid can be consumed in the deposition reaction or escape from reactor 100 as vapor. Accordingly, precursor input 108 can be utilized during operation of reactor 100 to replace precursor liquid which is dissipated.

During densification, the liquid precursor can become clouded. Accordingly, valve 114 can be opened to allow precursor liquid to flow through reactor 100 and return 112 to filter 116 where it is filtered and pumped back into reactor 100. Filter 116 can be any suitable filter, such as a porous ceramic screen or, more preferably, charcoal. Preferably, the precursor liquid can be removed from reactor 100 and can instead be distilled after one or more densification cycles once the precursor liquid becomes clouded.

The precursor liquids, as used herein, are potentially flammable. Accordingly, it is preferable that the densification operation be performed in an inert atmosphere. For example, nitrogen gas can be used. To purge chamber 102 of air, valve 120 is opened to allow an inert gas, such as nitrogen, to flow through input 118. Valve 124 can be opened to more rapidly and effectively purge vapor recovery system 130. Once the atmosphere in chamber 102 is replaced by an inert gas, such as nitrogen gas, valve 128 can be opened to provide nitrogen directly into vent stack 136. This flow of nitrogen prevents air from reaching chamber 102 and valves 120 and 124 can be closed. Closing valves 120 and 124 reduces the flow of gas through vapor recovery system 130. Vapor recovery system 130 can therefore operate more efficiently.

Vapor recovery system 130 is a system of the type known in the art for recovering vaporized liquids. Such a system reduces the amount of waste generated in the process and the amount of precursor used. Further, vapor recovery system 130 is for preventing the loss of a significant volume of the precursor liquid from vaporization.

In operation, a preform is placed in chamber 102 in close proximity to induction coil 104. A preform includes a fibrous structure, either woven or non-woven, having through pores. The fibers need to be essentially chemically non-reactive during the process of densification and under the conditions of their intended use. The preform is preferably placed in a support fixture to firmly hold the preform at a constant position in relation to the reactor and coil. The exact shape of the fixture is based on the shape of the preform. Such a fixture can be supported in any convenient way, such as on lip 132. It can be desirable to use different sizes or shapes of coils based on the shape of the preform. For this reason, induction coil 104 is connected to busses 106 at connector 134. Connector 134 continues the electrical circuit comprising busses 106. It also continues the water flow circuit formed by channels 105. Connector 134 can be a block of metal allowing anchoring points for screws (not shown) to hold the base of induction coil 104 to busses 106. The joints in the water flow circuit can be sealed by flexible "O" rings or in some other convenient fashion. The material must be resistant to degradation in both water and the precursor liquid. Viton^{®} fluoroelastomer from E.I. DuPont de Nemours & Co. or silicone rubber can be used for this purpose. Other attachment arrangements, such as slots and grooves or clips, can also be used.

Unlike CVD, which deposits a decomposition product throughout the preform during densification, densification with a precursor liquid results in a densification profile that typically begins at the center of the preform and progresses to the surfaces. As this densification progresses, a densified region is formed and the remaining portion of the preform includes an undensified region.
Thus, through the use of a precursor liquid, a partially densified preform can be formed, wherein the inner region of the preform is densified by depositing a decomposition product, such as carbon or silicon carbide, therein. The preform also has an undensified region of the preform between the densified region and at least one surface of the preform. In the method of the invention, the undensified portions of such a partially densified preform is then densified by chemical vapor deposition.

Densification of the preform takes advantage of a boiling liquid precursor to establish a temperature gradient within a heated preform. The temperature gradient is such that the densification center of the preform is hotter than the surface and thus the densification proceeds from the center to the surface as the temperature of the preform is increased. As decomposition product deposition proceeds, the conductivity of the preform increases, improving the coupling with the electric field. As shown in Figure 2, the inside diameter edges 202 and outer diameter edges 204 of preform 200, a ring shaped preform, such as those used in disk brakes, do not densify completely due to the large heat loss at these edges leaving undensified portion 206 and densified portion 208.

The preform is processed using a modified heating cycle in which the final power is decreased by about twenty-five percent from the power required to densify out to the edges of the preform. In a preferred embodiment, by adding an insulating material to the inside diameter surface and outside diameter surface of a non-woven preform prior to processing, the densification profile from the inside diameter and outside diameter surfaces can be optimized, which can result in less power consumed during processing and can lead to a shorter cycle time.

During partial densification, the densification is terminated at a distance from the outer surface of the preform. Typically, but not always, the distance is predetermined and can be about 0.1 and 0.2 inches (2.5 mm and 5.0 mm) from the wear surface. An example of a partially densified preform, made by the method of the present invention, is shown in Figure 5 and is further described in Example 2 herein.

In a preferred embodiment, portions of the preform can be covered with an insulating material which allows the inside diameter and outside diameter surfaces to reduce heat loss, thereby allowing a higher temperature at the edges of the preform to be maintained. The insulating material is a material that is capable of surviving in the densification environment and does not interfere with the inductive heating of the preform. It must withstand temperatures in excess of about 1,000°C, be generally inert to the precursor liquid, such as cyclohexane, and does not significantly couple inductively. Examples of suitable insulating materials include carbon felts and ceramics. The insulating material can be reusable or non-reusable. A suitable low density carbon felt can be attached, such as by stitching or by another appropriate means, to the inside diameter and outside diameter edges of a non-woven.

The desired degree of densification can be obtained by reducing the last twenty-five percent of a full densification cycle.

Further densification near the surfaces at the inside diameter and outside diameter surfaces is conducted by CVD or chemical vapor infiltration (CVI), in the presence of a gaseous precursor, such as methane or other gaseous hydrocarbons, to deposit carbon within the preform, or a suitable gaseous silicic compound to produce silicon carbide.

Typically, three or four chemical vapor deposition (CVD) cycles with a gaseous hydrocarbon, such as methane, are required to produce a carbon/carbon brake disk that is densified only using CVD. Each CVD cycle can require hundreds of hours to complete. By employing a liquid hydrocarbon densification process to partially densify the preform by primarily densifying the interior (non-wear portion) of the preform disk prior to CVD processing, the number of CVD cycles can be reduced to a few, preferably one, thus eliminating hundreds of hours of processing time while providing a brake disk that has the same friction and wear performance characteristics as a fully densified CVD brake disk. The densification of the partially densified is completed by chemical vapor deposition in an atmosphere comprising a gaseous precursor, such as methane, that heat decomposes to a second decomposition product within the undensified portions of the preform, thereby further densifying the preform. Examples of methods for chemical vapor deposition are described in U.S. Patent 4,212,906, issued to Fisher et al. on July 15, 1980; U.S. Patent 4,580,524, issued to Lackey et al. on April 8, 1986; and U.S. Patent 5,348,774, issued to Golecki et al. on September 20, 1994.

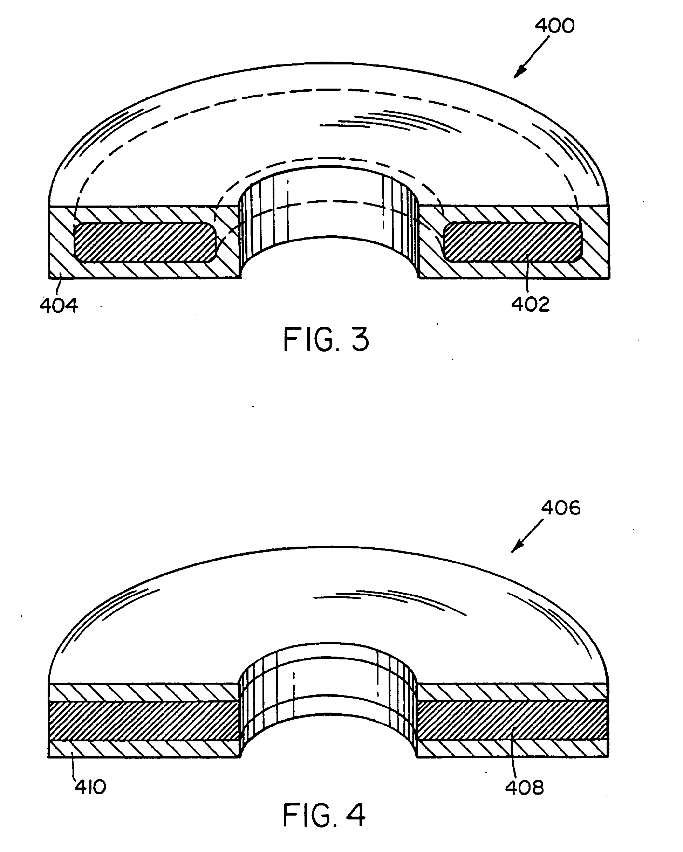

An example of a densified preform made by method of the present invention is shown in Figure 3. Densified preform 400 includes liquid hydrocarbon densified portion 402 and portion 404 formed by CVD of the gaseous hydrocarbon. Gaseous hydrocarbon densified portion 404 includes all the wear portion of a brake disk.

An alternative embodiment of a carbon densified preform made by the method of the present invention is shown in Figure 4. Densified preform 406 includes liquid hydrocarbon densified portion 408 and gaseous hydrocarbon densified portion 410. In this embodiment, the liquid hydrocarbon densification was conducted with insulation.

The following examples include an example of forming a densified preform by typical liquid densification (Example 1) as a comparison to a partially densified disk formed by the method of this invention (Example 2).

### EXAMPLE 1

A non-woven preform was constructed by stacking up layers of oxidized carbon tow (Avox carbon tow available from Textron Systems Corporation) and poking barbed needles through the stack. The needles dragged fibers through the layers locking the layers together. The preform was then subjected to a high temperature heat treatment (1,800°C) under vacuum to convert the oxidized fiber to carbon fiber (Avcarb). After heat treatment, the preform had a weight of 1,705 grams, a density of 0.54 g/cm³ and a fiber volume of 31 percent. A non-woven carbon preform for a disk brake was formed from this material having an inside diameter of 12.7 centimeters (five inches), an outside diameter of 34.3 centimeters (13.5 inches) and a thickness of four centimeters (1.56 inches). The preform was densified in a reactor similar to the one as shown in Figure 1 with cyclohexane as the precursor liquid.

The reactor included a liquid tight vessel capable of holding cyclohexane, a vapor recovery system to reclaim the vaporized cyclohexane, an inductive power supply and an induction coil capable of coupling to and heating a carbon preform. The vapor recovery system included a plate heat exchanger, Alfa Laval model type M10-BWFG. The inductive power supply included a Lepel LSP12-200-30 Model having a power of 200 kW and a frequency of 30 kHz.

The preform was placed within the reactor vessel and fixtured within the center of a pair of pancake induction coils. The reactor vessel was then assembled and attached to the vapor recovery system (plate heat exchanger). Cyclohexane was pumped into the reactor vessel submerging the preform and induction coils in liquid cyclohexane. The reactor system was then purged with nitrogen gas for a minium of twenty 20 minutes to remove any air present within the system.

The preform was then heated using the induction power supply system. The output power of the power supply was manual controlled by an operator. The operator maintained the output power of the power supply to follow a predetermined power trajectory.

Over a five hour densification cycle, the power density was set at 13.2 W/cm² (85 W/in²) and then the power density was increased to about 54.3 W/cm² (350 W/in²⁾ at 300 minutes. The power density for the run with cyclohexane is shown in Table I.

Upon completion of the densification cycle, the reactor was drained of cyclohexane and disassembled. The preform was removed from the set-up and placed in a solvent proof oven and dried at 175°C for a minimum of four hours to remove any residual cyclohexane.

The preform after being dried, as in all of the following Examples, was cut in half using a band saw with a diamond blade. The exposed surfaces were then hand polished using fine grit emery paper. These surfaces were then viewed under low magnification (5-10X) and the deposition profile was measured using a fifteen centimeter (six inch) vernier caliper.

The densified preform resulted in a high deposition at some portions of the surface of preform while other parts of the preform surface area remained undensified, as shown in Figure 2.

**TABLE I**

| cycle time (min) t | power density (W/in²) (W/cm²) Pd(t) | |
|---|---|---|
| 0 | 85 | (13.2) |
| 20 | 85 | (13.2) |
| 40 | 85 | (13.2) |
| 60 | 85 | (13.2) |
| 80 | 85.5 | (13.3) |
| 100 | 86 | (13.3) |
| 120 | 87.5 | (13.6) |
| 140 | 91 | (14.1) |
| 160 | 96.5 | (15.0) |
| 180 | 105.5 | (16.4) |
| 200 | 120 | (18.6) |
| 220 | 141 | (21.9) |
| 240 | 172 | (26.7) |
| 260 | 214.5 | (33.3) |
| 280 | 272.5 | (42.4) |
| 300 | 350 | (54.3) |

### EXAMPLE 2

A non-woven carbon preform was formed by the same method as described in Example 1. The non-woven carbon preform for a brake disk was formed having an inside diameter of 12.7 centimeters (five inches), an outside diameter of 34.3 centimeters (13.5 inches) and a thickness of 4.0 centimeters (1.59 inches). The preform had a weight of 1,680 grams, a density of 0.522 g/cm³ and a fiber volume of 30 percent. The power density for this run was reduced as compared to the run in Example 1. Over a five hour densification cycle, the power density was set at 13.2 W/cm² (85 W/in²) and then the power density was increased to about 46.5 W/cm² (300 W/in²) at 300 minutes. The power density for the run with cyclohexane is shown in Table II.

A cross-sectional view of the partially densified preform is shown in Figure 5. The partially densified preform 500 resulted in an undensified portion 502 and a densified portion 504 at a desired distance from the faces. The densification stopped at a distance of about 0.28 to 0.33 centimeters (0.11 to 0.13 inches) (Distance A as shown in Figure 5) from the side surfaces 506 and at a distance of about 0.89 centimeters (0.35 inches) (Distance B as shown in Figure 5) from the outside diameter 508 and inside diameter 510.

The undensified portions of such a partially densified preform is then densified by chemical vapor deposition.

**TABLE II**

| cycle time (min) t | power density (W/in²) (W/cm²) Pd(t) | |
|---|---|---|
| 0 | 85 | (13.2) |
| 20 | 85 | (13.2) |
| 40 | 85 | (13.2) |
| 60 | 85 | (13.2) |
| 80 | 85.5 | (13.3) |
| 100 | 86 | (13.3) |
| 120 | 87 | (13.5) |
| 140 | 90 | (14.0) |
| 160 | 94.5 | (14.7) |
| 180 | 101.5 | (15.7) |
| 200 | 113.5 | (17.6) |
| 220 | 130.5 | (20.2) |
| 240 | 155.5 | (24.1) |
| 260 | 190 | (29.5) |
| 280 | 237.5 | (36.8) |
| 300 | 300 | (46.5) |

## Claims

1. A method for densifying one or more porous preforms, comprising :
a) submerging the porous preform in a precursor liquid which is heat-decomposable;
b) heating the porous preform in the precursor liquid at a temperature sufficient to decompose the precursor liquid and to deposit a first decomposition product of the precursor liquid within the preform;
c) ceasing heating said preform in the precursor liquid prior to densifying the surface of the preform, thereby forming a partially densified preform, wherein a densified portion of the partially densified preform is at a predetermined distance from at least one surface of the preform, thereby leaving an undensified portion of the preform between the densified portion and at least one surface of the preform; and
d) completing densification of the preform by chemical vapor deposition in an atmosphere comprising a gaseous precursor that heat decomposes to a second decomposition product within the undensified portions of said preform, thereby further densifying the preform.

2. The method of Claim 1 wherein the first decomposition product includes carbon.

3. The method of Claim 1 wherein the precursor liquid includes a hydrocarbon.

4. The method of claim 3 wherein the hydrocarbon is selected from the group consisting of cyclopentane, cyclohexene, 1-hexene, gasoline, toluene, methylcyclohexane, cyclohexane, n-hexane and benzene, or a combination thereof.

5. The method of Claim 1 wherein the first decomposition product includes silicon carbide.

6. The method of Claim 1 wherein the precursor liquid includes an organosilane.

7. The method of Claim 6 wherein the organosilane is selected from the group consisting of methyltrichlorosilane, dimethyldichlorosilane and methyldichlorosilane.

8. The method of Claim 1 wherein the gaseous precursor is selected from the group consisting of methane, ethane and propane.

9. The method of Claim 1 the first decomposition product and second decomposition product are the same.

10. A densified preform formed by the method of Claim 1.

11. A brake assembly having a densified preform formed by the method of Claim 1.

12. The method of claim 1, wherein
a) The precursor liquid is cyclohexane;
b) The first decomposition product is carbon; and
c) The gaseous precursor is a gaseous hydrocarbon.

13. The method of Claim 12 wherein the predetermined distance is in the range of between about 0.25 and 0.51 centimeters (0.1 and 0.2 inches).

## Patentansprüche

1. Verfahren zum Verdichten einer oder mehrerer poröser Vorformen, umfassend:
a) Eintauchen der porösen Vorform in eine Vorläuferflüssigkeit, welche wärmezersetzbar ist,
b) Erwärmen der porösen Vorform in der Vorläuferflüssigkeit bei einer ausreichenden Temperatur, um die Vorläuferflüssigkeit zu zersetzen und ein erstes Zersetzungsprodukt der Vorläuferflüssigkeit in der Vorform abzuscheiden,
c) Einstellen des Erwärmens der Vorform in der Vorläuferflüssigkeit vor Verdichtung der Oberfläche der Vorform, und dadurch Ausbilden einer teilweise verdichteten Vorform, wobei sich ein verdichteter Teil der teilweise verdichteten Vorform bei einem vorbestimmten Abstand von wenigstens einer Oberfläche der Vorform befindet, und dadurch ein unverdichteter Teil der Vorform zwischen dem verdichteten Teil und wenigstens einer Oberfläche der Vorform belassen wird, und
d) Vervollständigen des Verdichtens der Vorform durch chemische Dampfabscheidung in einer Atmosphäre, die einen gasförmigen Vorläufer umfaßt, der sich wärmezersetzt zu einem zweiten Zersetzungsprodukt in den unverdichteten Teilen der Vorform, wodurch die Vorform weiter verdichtet wird.

2. Verfahren nach Anspruch 1, wobei das erste Zersetzungsprodukt Kohlenstoff umfaßt.

3. Verfahren nach Anspruch 1, wobei die Vorläuferflüssigkeit einen Kohlenwasserstoff umfaßt.

4. Verfahren nach Anspruch 3, wobei der Kohlenwasserstoff aus der aus Cyclopentan, Cyclohexen, 1-Hexen, Benzin, Toluol, Methylcylcohexan, Cyclohexan, n-Hexan und Benzol bestehenden Gruppe oder einer Kombination davon gewählt ist.

5. Verfahren nach Anspruch 1, wobei das erste Zersetzungsprodukt Siliziumcarbid umfaßt.

6. Verfahren nach Anspruch 1, wobei die Vorläuferflüssigkeit ein Organosilan umfaßt.

7. Verfahren nach Anspruch 6, wobei das Organosilan aus der aus Methyltrichlorsilan, Dimehtyldichlorsilan und Methyldichlorsilan bestehenden Gruppe gewählt ist.

8. Verfahren nach Anspruch 1, wobei der gasförmige Vorläufer aus der aus Methan, Ethan und Propan bestehenden Gruppe gewählt ist.

9. Verfahren nach Anspruch 1, wobei das erste Zersetzungsproduckt und das zweite Zersetzungsprodukt dieselben sind.

10. Verdichtete Vorform, ausgebildet nach dem Verfahren von Anspruch 1.

11. Bremsanordnung mit einer verdichteten Vorform, die ausgebildet ist nach dem Verfahren von Anspruch 1.

12. Verfahren nach Anspruch 1, wobei
a) die Vorläuferflüssigkeit Cyclohexan ist,
b) das erste Zersetzungsprodukt Kohlenstoff ist, und
c) der gasförmige Vorläufer ein gasförmiger Kohlenwasserstoff ist.

13. Verfahren nach Anspruch 12, wobei der vorbestimmte Abstand im Bereich von etwa 0,25 bis 0,51 cm (0,1 und 0,2 Inch) liegt.

## Revendications

1. Procédé pour densifier une ou plusieurs préformes poreuses, comprenant :
a) l'immersion de la préforme poreuse dans un liquide précurseur qui est décomposable thermiquement ;
b) le chauffage de la préforme poreuse dans le liquide précurseur à une température suffisante pour décomposer le liquide précurseur et pour déposer un premier produit de décomposition du liquide précurseur dans la préforme ;
c) l'arrêt du chauffage de ladite préforme dans le liquide précurseur avant de densifier la surface de la préforme, en formant ainsi une préforme partiellement densifiée, où une partie densifiée de la préforme partiellement densifiée est à une distance prédéterminée d'au moins une surface de la préforme, en laissant ainsi une partie non densifiée de la préforme entre la partie densifiée et au moins une surface de la préforme ; et
d) l'achèvement de la densification de la préforme par dépôt chimique en phase vapeur dans une atmosphère comprenant un précurseur gazeux qui se décompose thermiquement en un second produit de décomposition dans les parties non densifiées de ladite préforme, en densifiant ainsi encore la préforme.

2. Procédé selon la revendication 1 où le premier produit de décomposition inclut du carbone.

3. Procédé selon la revendication 1 où le liquide précurseur inclut un hydrocarbure.

4. Procédé selon la revendication 3 où l'hydrocarbure est choisi dans le groupe consistant en le cyclopentane, le cyclohexène, le 1-hexène, l'essence, le toluène, le méthylcyclohexane, le cyclohexane, le n-hexane et le benzène, ou une combinaison de ceux-ci.

5. Procédé selon la revendication 1 où le premier produit de décomposition inclut du carbure de silicium.

6. Procédé selon la revendication 1 où le liquide précurseur inclut un organosilane.

7. Procédé selon la revendication 6 où l'organosilane est choisi dans le groupe consistant en le méthyltrichlorosilane, le diméthyldichlorosilane et le méthyldichlorosilane.

8. Procédé selon la revendication 1 où le précurseur gazeux est choisi dans le groupe consistant en le méthane, l'éthane et le propane.

9. Procédé selon la revendication 1 où le premier produit de décomposition et le second produit de décomposition sont les mêmes.

10. Préforme densifiée formée par le procédé selon la revendication 1.

11. Ensemble de frein ayant une préforme densifiée formée par le procédé selon la revendication 1.

12. Procédé selon la revendication 1, où
a) le liquide précurseur est le cyclohexane ;
b) le premier produit de décomposition est le carbone ; et
c) le précurseur gazeux est un hydrocarbure gazeux.

13. Procédé selon la revendication 12 où la distance prédéterminée est dans la plage entre environ 0,25 et 0,51 centimètre (0,1 et 0,2 pouce).
